# EUROPÄISCHE PATENTANMELDUNG

(11) **EP 4 480 293 A1**
(43) Veröffentlichungstag der Anmeldung: **25.12.2024**
(21) Anmeldenummer: 24179191.2
(22) Anmeldetag: 31.05.2024
(51) Int. Cl.: A01B 73/04, A01B 73/06

(54) **LANDWIRTSCHAFTLICHES ARBEITSGERÄT MIT ABSTÜTZEINRICHTUNG**

(30) Priorität: 19.06.2023 DE 102023115971
(71) Anmelder: Horsch Maschinen GmbH, 92421 Schwandorf (DE)
(72) Erfinder: POLLINGER, Johannes, 92421 Schwandorf (DE); CHAMBELLANT, Fabien, 92421 Schwandorf (DE)
(74) Vertreter: v. Bezold & Partner Patentanwälte - PartG mbB

(57) **Zusammenfassung**

Die Erfindung betrifft ein landwirtschaftliches Arbeitsgerät (10), insbesondere ein Bodenbearbeitungs- und/oder Sägerät mit einer großen Arbeitsbreite, mit einem Zentralrahmen (14) und zwei gegenüber dem Zentralrahmen (14) in eine Arbeitsstellung und eine Transportstellung schwenkbare Seitenteile (12), wobei die Seitenteile (12) jeweils durch zumindest einen Rahmenträger (22) gebildet sind, an welchem Arbeitswerkzeuge (24) gelagert sind und an welchem mittels eines Schwenkträger (26), mindestens eine Abstützeinrichtung (28), welche zur Höhenführung der Arbeitswerkzeuge (24) und/oder des Rahmenträger (22) entlang einer Bodenfläche eingerichtet ist, gelagert ist. Das erfindungsgemäße landwirtschaftliche Arbeitsgerät (10) zeichnet sich dadurch aus, dass der Schwenkträger (26) mittels einer in der Arbeitsstellung der Seitenteile (12) zumindest annähernd vertikal orientierten Achse (30) schwenkbar an dem Rahmenträger (22) gelagert ist.

## Beschreibung

Die Erfindung liegt im Gebiet der Landtechnik und betrifft ein landwirtschaftliches Arbeitsgerät mit zumindest einer Abstützeinrichtung, insbesondere ein Bodenbearbeitungs- und/oder Sägerät mit einer großen Arbeitsbreite.

Ein derartiges Arbeitsgerät wurde aus dem Stand der Technik bereits durch die EP 1 935 224 A1 bekannt. Beschrieben ist ein gezogenes landwirtschaftliches Arbeitsgerät großer Arbeitsbreite, mit einem eine Zugdeichsel aufweisenden Zentralrahmen, wobei am Zentralrahmen sich jeweils seitlich des Zentralrahmens erstreckende Rahmenträger, angeordnet sind, wobei die Rahmenträger gegenüber dem Zentralrahmen jeweils um eine sich im vorderen Bereich der Rahmenträger befindliche horizontale und sich quer zur Fahrtrichtung erstreckende Achse um 90° nach oben verschwenkbar angeordnet sind und wobei die Rahmenträger jeweils um eine sich etwa an ihrem inneren Endbereich befindenden Schwenkachse, die in der um 90° nach oben verschwenkten Stellung der Rahmenträger aufrecht verläuft, um 90° nach vorne in eine parallel zur Fahrtrichtung verlaufende Position verschwenkbar sind. Um eine für einen Straßentransport maximal zulässige Transportbreite nicht zu überschreiten ist zudem vorgesehen, dass die an den Rahmenträger angeordneten Bodenbearbeitungs- und/oder Säelemente in Richtung der Rahmenträger mittels Stellelementen einziehbar, d.h. höhenverstellbar angeordnet sind.

Die Höhenverstellbarkeit der Bodenbearbeitungs- und/oder Säelemente bedingt jedoch einen Vorratsbehälter der derartig ausgeführt ist, dass es zu keiner Kollision zwischen Bodenbearbeitungs- und/oder Säelementen kommen kann. Wodurch aber wiederum das Volumen des Vorratsbehälters reduziert werden muss. Insbesondere ist somit auch eine Verwendung des Vorratsbehälters in Verbindung mit unterschiedlichen Arbeitsbreiten aufweisenden Seitenteilen erschwert, d.h. es ist somit die Verwendung des Vorratsbehälters erschwert in Verbindung mit Seitenteilen die verschiedene Arbeitsbreiten aufweisen, um somit bspw. Arbeitsgeräte unterschiedlicher Arbeitsbreite mit dem gleichen Vorratsbehälter bauen zu können.

Aufgabe der Erfindung ist es somit, die beschriebenen Nachteile des Standes der Technik zu beseitigen. Insbesondere soll ein landwirtschaftliches Arbeitsgerät mit Abstützeinrichtung geschaffen werden, bei welchem eine Einhaltung einer maximal zulässigen Transportbreite in verbesserter Weise möglich ist.

Diese Aufgaben werden gelöst durch ein landwirtschaftliches Arbeitsgerät mit den Merkmalen des unabhängigen Anspruch 1, wobei vorteilhafte Ausgestaltungen und Weiterbildungen der Erfindung aus den jeweiligen abhängigen Ansprüchen und der folgenden Beschreibung unter teilweiser Bezugnahme auf die Figuren hervorgehen.

Die Erfindung betrifft ein landwirtschaftliches Arbeitsgerät, insbesondere ein Bodenbearbeitungs- und/oder Sägerät mit einer großen Arbeitsbreite. Das Arbeitsgerät ist zweckmäßig zur Bearbeitung einer Bodenfläche und/oder zur Verteilung, insbesondere zur Aussaat, von landwirtschaftlichen Verteilgütern wie bspw. Saatgut, Dünger oder dergl. eingerichtet.

Das Arbeitsgerät umfasst einen Zentralrahmen und zwei gegenüber dem Zentralrahmen, insbesondere gegenüber einen einen Bestandteil des Zentralrahmen bildenden Koppelrahmen, in eine Arbeitsstellung und eine Transportstellung schwenkbare Seitenteile. Die Transportstellung ist insbesondere durch eine Lage der Seitenteile gegenüber dem Zentralrahmen definiert in der eine maximal zulässige Transportbreite des Arbeitsgerätes nicht überschritten wird, wobei die Transportbreite derzeit in Deutschland bspw. 3 Meter beträgt. Demgegenüber ist die Arbeitsstellung durch eine Lage der Seitenteile gegenüber dem Zentralrahmen definiert, in der die Seitenteile eine Erstreckung quer zur Fahrtrichtung aufweisen und bspw. an den Seitenteilen gelagerte Arbeitswerkzeuge in Bodennähe und/oder Bodenkontakt geführt werden. Insbesondere erstreckt sich ein Seitenteile gegenüber dem Zentralrahmen links und ein Seitenteil gegenüber dem Zentralrahmen rechts in Bezug auf die Fahrtrichtung. Die Arbeitsbreite ist insbesondere durch die Längserstreckung der zwei Seitenteile quer zur Fahrtrichtung definiert.

Die Seitenteile sind bevorzugt durch zumindest einen Rahmenträger gebildet, an welchem Arbeitswerkzeuge (z.B. Säschare, Bodenbearbeitungsschare, Zinken, Scheiben und/oder dergl.) gelagert sind und an welchem mittels eines Schwenkträger mindestens eine Abstützeinrichtung, welche zur Höhenführung der Arbeitswerkzeuge und/oder des Rahmenträger entlang einer Bodenfläche eingerichtet ist, gelagert ist. Insbesondere kann vorgesehen sein, dass die Arbeitswerkezuge ausschließlich an den Seitenteilen gelagert sind. Alternativ oder ergänzend ist es aber auch denkbar, dass neben den Seitenteilen auch am Zentralrahmen Arbeitswerkzeuge gelagert sind, insbesondere an einem einen Bestandteil des Zentralrahmen bildenden Koppelrahmen.

Zur Schaffung eines landwirtschaftlichen Arbeitsgerätes mit Abstützeinrichtung, bei welchem eine Einhaltung einer maximal zulässigen Transportbreite in verbesserter Weise möglich ist, ist erfindungsgemäß vorgesehen, dass der Schwenkträger mittels einer in der Arbeitsstellung der Seitenteile zumindest annähernd vertikal orientierten Achse schwenkbar an dem Rahmenträger gelagert ist.

Durch die erfindungsgemäße Möglichkeit die Abstützeinrichtung, um eine in Arbeitsstellung vertikal orientierte Achse schwenken zu können, wird somit ein Arbeitsgerät geschaffen, bei welchem es möglich ist, die Abstützeinrichtung in flexibler Weise in verschiedenste Lagen zu verschwenken, so dass eine Positionierung der Abstützeinrichtung in der Transportstellung wesentlich flexibler wird, insbesondere in Verbindung mit der Verwendung eines, für ein Arbeitsgerät mit großer Arbeitsbreite benötigten großen Vorratsbehälters.

Es sei angemerkt das im Kontext der Erfindung von der Definition "vertikal orientiert" jegliche Achsen umfasst sind die aufrecht orientiert sind, insbesondere Achsen umfasst sind die im Wesentlichen senkrecht orientiert sind.

Insbesondere ist vorgesehen, dass jedem Seitenteil eine Abstützeinrichtung zumindest eine erfindungsgemäße Abstützeinrichtung zugeordnet ist, so dass das Arbeitsgerät zwei Abstützeinrichtungen mit jeweiligen Schwenkträgern umfasst.

Bevorzugt ist vorgesehen, dass zur Überführung aus der Arbeitsstellung in die Transportstellung ausschließlich die Abstützeinrichtung mit Schwenkträger um eine aufrecht orientierte Achse schwenkbar am Rahmenträger gelagert sind.

In einer bevorzugten Ausführungsvariante des erfindungsgemäßen Arbeitsgerätes kann vorgesehen sein, dass der Schwenkträger derartig schwenkbar an dem Rahmenträger gelagert ist, insbesondere an einem äußeren Endbereich des Rahmenträger schwenkbar gelagert ist, dass die Abstützeinrichtung in der Arbeitsstellung den Arbeitswerkzeugen vorgelagert ist und in der Transportstellung zumindest abschnittweise oder vollständig seitlich neben den Arbeitswerkzeugen angeordnet ist. Insbesondere kann vorgesehen sein, dass der Schwenkträger derartig schwenkbar an dem Rahmenträger gelagert ist, dass in der Arbeitsstellung die Laufrichtung der Abstützeinrichtung parallel zur Fahrtrichtung des Arbeitsgerätes orientiert ist und in der Transportstellung quer, insbesondere in einem Winkel von wenigstens 45° oder 90°, zur Fahrtrichtung des Arbeitsgerätes orientiert ist.

Bevorzugt kann vorgesehen sein, dass ein Schwenkwinkel des Schwenkträger zwischen der Arbeitsstellung und der Transportstellung größer ist als 45° oder größer ist 90° und insbesondere kleiner ist als 150°. Insbesondere kann die Anordnung der vertikalen Achse und die Dimension des Schwenkträger derartig ausgeführt sein, dass entsprechende Schwenkwinkel erreichbar sind. Insbesondere kann eine Drehrichtung wiederum abhängig sein von der jeweiligen Montageposition des jeweiligen Seitenteils gegenüber dem Zentralrahmen. Bevorzugt ist es möglich, dass bei Verwendung von zwei Abstützeinrichtungen mit jeweiligen Schwenkträger an einem jeweiligen linken Seitenteil und rechten Seitenteil, diese jeweils unterschiedliche Drehrichtungen zueinander aufweisen.

In einer bevorzugten Ausführungsform kann vorgesehen sein, dass der Schwenkträger in einer Draufsicht einen im wesentlichen gespreizten L-Förmigen Aufbau aufweist. Wobei wiederum die Spreizung zudem insbesondere kleiner ist als 180° und größer sein kann als 90°. Zudem kann vorgesehen sein, dass sich an einem Endbereich die vertikal orientierte Achse befindet.

Gemäß einer anderen bevorzugten Ausführungsvariante des erfindungsgemäßen Arbeitsgerätes kann vorgesehen sein, dass zur Einhaltung der jeweiligen erforderlichen Lage der Abstützeinrichtungen in der Arbeitsstellung und in der Transportstellung, mit dem Rahmenträger und dem Schwenkträger in Wirkverbindung stehende Endanschläge vorgesehen sind, wobei die Lage der Endanschläge insbesondere verstellbar ausgeführt ist. Zweckmäßig kann vorgesehen sein, dass die Endanschläge mittels eines Gewindes verstellbar sind und/oder durch entsprechend Hubbegrenzungselemente verstellbar sind.

Alternativ oder ergänzend ist es möglich, dass zum Verschwenken des Schwenkträger eine Stelleinrichtung vorgesehen ist, wobei dessen Verfahrweg entsprechend ausgeführt und/oder anpassbar ist. Insbesondere ist es möglich, dass der jeweilige Verfahrweg der Stelleinrichtung durch Hubbegrenzungselemente in zumindest eine Richtung anpassbar, d.h. verstellbar ausgeführt ist.

Die Stelleinrichtung ist zweckmäßig durch einen einfachwirkenden oder doppeltwirkenden hydraulisch oder pneumatisch betriebenen Zylinder gebildet.

Eine alternative oder ergänzende Ausführungsvariante kann vorsehen, dass Schwenkbewegungen des Schwenkträger insbesondere in der Transportstellung absperrbar sind, wobei dies bevorzugt mittels einer mechanischen Arretiervorrichtung erfolgen kann und/oder mittels eines mit der Stelleinrichtung wirkverbundenen Ventils erfolgen kann. Wobei das Ventil bspw. ein hydraulisches oder pneumatisches Sperrventil, Sitzventil und/oder dergl. sein kann. Die Arretiervorrichtung kann bspw. einen Steckbolzen, einen mechanischen Anschlag und/oder dergl. umfassen.

Um eine noch flexiblere Anpassung der Lage der Abstützeinrichtung zu erreichen, kann gemäß einer Weiterbildung vorgesehen sein, dass die Abstützeinrichtung höhenverstellbar am Schwenkträger gelagert ist, vorzugsweise mittels eines Aktors höhenverstellbar am Schwenkträger gelagert ist. Alternativ oder ergänzend kann vorgesehen sein, dass der Schwenkträger höhenverstellbar am Rahmenträger gelagert ist, vorzugsweise mittels eines Aktors höhenverstellbar am Rahmenträger gelagert ist. Zur Höhenverstellung kann die Abstützeinrichtung und/oder der Schwenkträger um eine, in der Arbeitsstellung quer zur Fahrtrichtung orientierte Lagerachse schwenkbar gelagert sein. Bevorzugt kann die Lagerung des Schwenkträgers an dem Rahmenträger mittels eines Kugelgelenks erfolgen, welches Kugelgelenk zum einen die vertikal orientierte Achse bildet und zudem eine Höhenverstellbarkeit ermöglicht, insbesondere kann das Kugelgelenk somit wenigstens zwei Freiheitsgrade aufweisen. Der Aktor ist zweckmäßig durch einen einfachwirkenden oder doppeltwirkenden hydraulisch oder pneumatisch betriebenen Zylinder gebildet. Insbesondere kann vorgesehen sein, dass die Abstützeinrichtung und/oder der Schwenkträger in der Transportstellung eine andere Höhenlage gegenüber dem Rahmenträger aufweist als in der Arbeitsstellung.

Ein besonders bevorzugter Aufbau des Arbeitsgeräts kann vorsehen, dass dem Zentralrahmen eine Zugdeichsel und ein Fahrwerk zugeordnet sind und die Seitenteile sich in der Arbeitsstellung jeweils seitlich (d.h. ein Seitenteil link und ein Seitenteil rechts) des Zentralrahmens erstrecken, wobei zur Überführung des Arbeitsgeräts aus der Arbeitsstellung in die Transportstellung die Seitenteile gegenüber dem Zentralrahmen jeweils um 90° nach oben verschwenkbar angeordnet sind, insbesondere mittels eines einen Bestandteil des Zentralrahmen bildenden Koppelrahmen der eine horizontale und sich quer zur Fahrtrichtung ersteckende Klappachse aufweist um 90° nach oben verschwenkbar angeordnet sind, und wobei die Rahmenträger jeweils um eine sich etwa an ihrem inneren Endbereich befindende Schwenkachse, die in der um 90° nach oben verschwenkten Stellung der Rahmenträger aufrecht verläuft um 90° nach vorne in eine parallel zur Fahrtrichtung verlaufende Position schwenkbar sind. Insbesondere wird durch einen derartigen Aufbau ein Arbeitsgerät mit einer großen Arbeitsbreite geschaffen, welches dennoch eine kompakte Transportstellung ermöglicht.

Wie vorstehend bereits beschrieben ist es möglich, dass das Schwenken des Schwenkträgers mittels einer Stelleinrichtung erfolgt, wobei es zudem möglich ist, dass die Stelleinrichtung mittels durch eine Steuereinrichtung erzeugte Stellsignale ansteuerbar ist und wobei die Steuereinrichtung eingerichtet ist, Stellsignale zum verschwenken des Schwenkträger automatisiert anhand einer Überführung der Seitenteile von der Arbeitsstellung in die Transportstellung zu erzeugen. Bevorzugt ist es möglich, dass das Verschwenken des Schwenkträgers durch eine Ablaufsteuerung der Steuereinrichtung erfolgt. Eine Überführung kann bspw. durch die 90° nach oben verschwenkte Lage der Seitenteile detektiert werden. Insbesondere ist es möglich, dass die zwei Abstützeinrichtungen der zwei Seitenteile im Wesentlichen synchron in unterschiedliche Drehrichtungen bewegt werden.

Die Steuereinrichtung weist bspw. eine Rechnereinheit, einen Bordcomputer und/oder dergl. auf und umfasst zudem einen Steuer- und/oder Regelkreis, insbesondere einen hydraulischen und/oder pneumatischen und/oder elektrischen Steuer- und/oder Regelkreis, wobei der Steuer- und/oder Regelkreis zweckmäßig zur hydraulischen und/oder pneumatischen und/oder elektrischen Signal- und/oder Befehlsübertragung und/oder Ablaufsteuerung ausgebildet ist. Welche Signal- und/oder Befehlsübertragung auch drahtlos (z.B. mittels WLAN) erfolgen kann. Es sei noch darauf hingewiesen, dass der Begriff "Steuern" und "Steuereinrichtung" sich auf elektronische und/oder pneumatische und/oder hydraulische Steuerungen oder Regelungen beziehen können, die je nach Ausbildung Steuerungsaufgaben und/oder Regelungsaufgaben übernehmen können. Auch wenn hierin der Begriff "Steuern" verwendet wird, kann damit gleichsam zweckmäßig auch "Regeln" umfasst sein. Ebenso kann bei Verwendung des Begriffs "Regeln" gleichsam auch ein "Steuern" damit umfasst sein.

Um auch für ein Arbeitsgerät mit einer großen Arbeitsbreite eine ausreichende Menge an Verteilgut mitführen zu können, ist es gemäß einer Weiterbildung des erfindungsgemäßen Arbeitsgeräts möglich, dass dem Zentralrahmen ein Vorratsbehälter zugeordnet ist, der insbesondere ein Gesamtvolumen von wenigstens 2000 Liter oder von wenigstens 4000 Liter aufweist. Wobei der Vorratsbehälter bspw. eingerichtet sein kann, eine Verteilgutsorte oder unterschiedliche Verteilgutsorten zeitgleich mitzuführen. Insbesondere kann das Gesamtvolumen aus zwei oder mehreren Einzelvolumen zusammengesetzt sein, wobei wiederum die Einzelvolumen durch jeweils eine Kammer gebildet sein können oder durch einzelne Behälter gebildet sein können.

Gemäß einer bevorzugten Ausführungsvariante des Arbeitsgeräts kann vorgesehen sein, dass die Abstützeinrichtung mittels des Schwenkträger derartig schwenkbar an dem Rahmenträger gelagert ist, dass in der Transportstellung die Abstützeinrichtung zumindest abschnittweise oberhalb des Vorratsbehälter angeordnet ist und/oder in Fahrtrichtung zumindest abschnittweise vor dem Vorratsbehälter angeordnet ist und/oder quer zur Fahrtrichtung zumindest abschnittweise neben dem Vorratsbehälter angeordnet ist.

Bevorzugt ist es möglich, dass die Abstützreinrichtung durch ein Einzelelement oder durch zwei oder mehr nebeneinander angeordnete Einzelelemente oder als Walze gebildet ist, wobei vorzugsweise der Durchmesser eines Einzelelements oder der Walze im Wesentlichen identisch oder um maximal 25% größer oder um maximal 50% größer ist als die Höhenerstreckung der Arbeitswerkzeuge. Insbesondere kann das Einzelelement oder können die zwei oder mehr Einzelelemente durch Räder gebildet sein.

Zur Lagerung des jeweiligen Einzelelements oder der Walze kann zudem am Schwenkträger jeweils ein Achsstummel oder dergl. Drehlagerung vorgesehen sein.

Gemäß einer Weiterbildung der Erfindung kann vorgesehen sein, dass der Rahmenträger mehrteilig ausgeführt ist und die aufrechte orientierte Achse an einem Abschnitt des Rahmenträger angeordnet ist, der gegenüber dem anderen Abschnitt verstellbar, insbesondere teleskopisch, gelagert ist.

Gemäß einer Weiterbildung der Erfindung ist es möglich, dass in der Transportstellung die Arbeitswerkzeuge gegenüber dem Rahmenträger schwenkbar gelagert sind, insbesondere um ein sich parallel zur Längsrichtung des Rahmenträger erstreckendes Montagerohr schwenkbar gelagert sind, vorzugsweise höhenverstellbar derartig gelagert sind, dass deren Orientierung in der Transportstellung in Richtung der Maschinenmitte gerichtet ist.

Der unbestimmte Artikel "ein", "eine" bzw. deren Deklinationen schließen eine Mehrzahl der damit bezeichneten Merkmale nicht aus. So sind sowohl die bisherigen als auch die folgenden Angaben mit "ein" bzw. "eine" als "mindestens ein" bzw. "mindestens eine" zu verstehen.

Weitere Einzelheiten und Vorteile der Erfindung werden im Folgenden unter Bezug auf die beigefügten Zeichnungen beschrieben. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind. Es zeigen:
- Figur 1A: ein Perspektivansicht eines Ausführungsbeispiel eines erfindungsgemäßen Arbeitsgeräts in einer Transportstellung,
- Figur 1B: eine Perspektivansicht des Arbeitsgerät gemäß der Figur 1A in einer Arbeitsstellung,
- Figur 1C: eine Detailansicht der Anbindung der Seitenteile an einen einen Bestandteil des Zentralrahmen bildenden Koppelrahmen gemäß dem Arbeitsgerät der Figur 1B mit einem ausgeblendeten Rad des Fahrwerks,
- Figur 2A: eine Perspektivansicht eines linken Seitenteils wie es beim Arbeitsgerät gemäß der Figur 1A zum Einsatz kommt mit einer Abstützeinrichtung in Arbeitsstellung,
- Figur 2B: eine Perspektivansicht des Seitenteil gemäß der Figur 2A mit einer Abstützeinrichtung in Transportstellung,
- Figur 2C: eine Perspektivansicht im Detail der Abstützeinrichtung gemäß der Figur 2B,
- Figur 2D: eine Draufsicht im Schnitt der Abstützeinrichtung gemäß der Figur 2C.

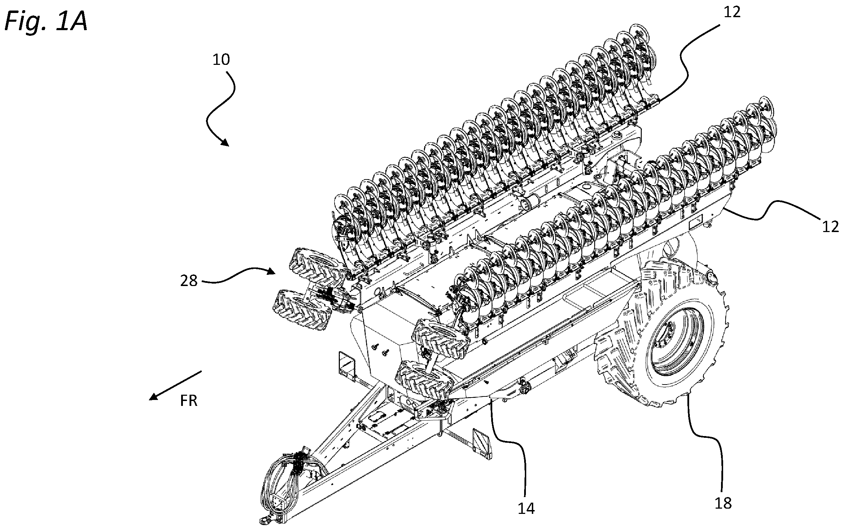

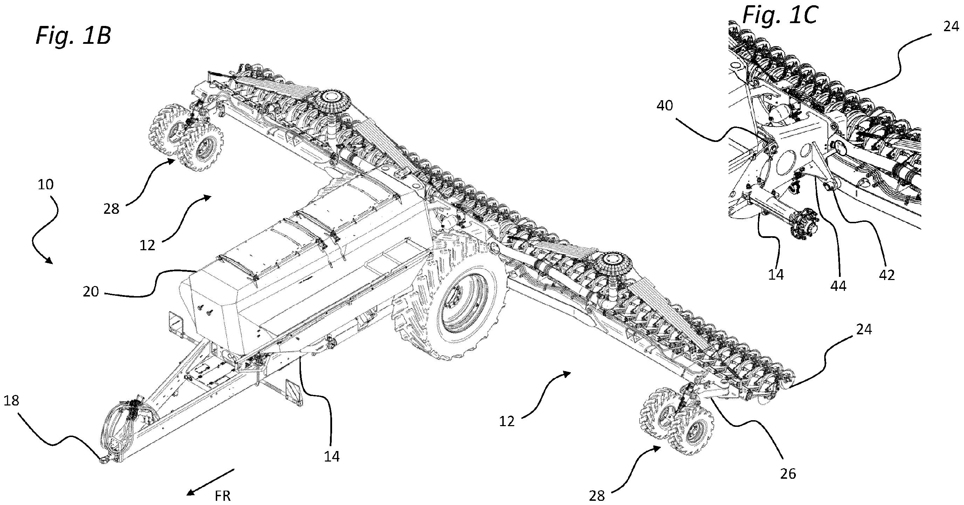

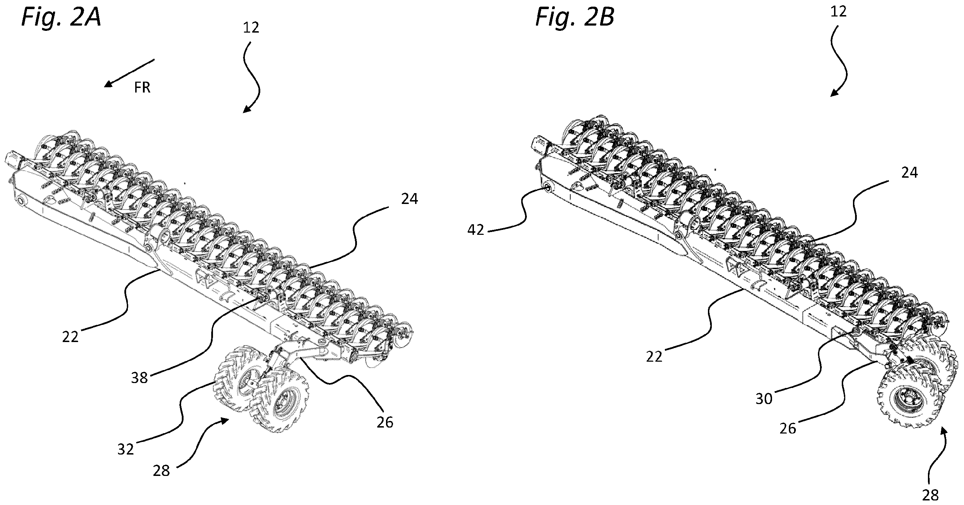

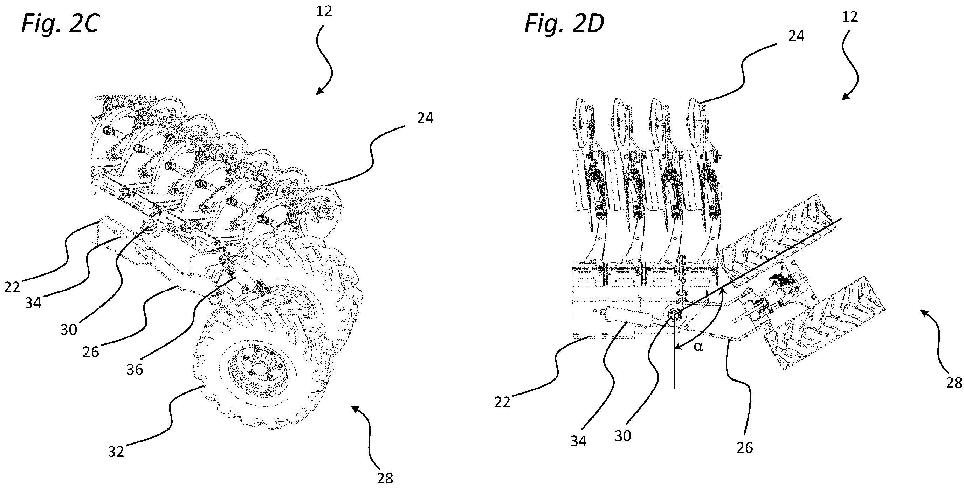

Die in den Figuren 1 und 2 gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

Die Figuren 1 und 2 zeigen unterschiedliche Ansichten eines Ausführungsbeispiels eines erfindungsgemäßen Arbeitsgeräts 10 sowie eines Seitenteils 12, wie es bspw. im Ausführungsbeispiel des Arbeitsgerätes zum Einsatz kommt, die unter gemeinsamer Bezugnahme auf die Figuren 1A bis 2D beschrieben werden.

Das Ausführungsbeispiel zeigt ein Arbeitsgerät 10 in Form eines Sägerät mit einer großen Arbeitsbreite, von bspw. 6 Meter oder 12 Meter oder mehr. Das Arbeitsgerät 10 dient zweckmäßig zur Verteilung, insbesondere zur Aussaat von landwirtschaftlichen Verteilgütern wie bspw. Saatgut, Dünger oder dergl. Die Arbeitsbreite wird jeweils durch eine Längserstreckung der Seitenteile 12 quer zur Fahrtrichtung FR in der Arbeitsstellung definiert.

Die Seitenteile 12 sind an einem rückwärtigen Ende des Zentralrahmen 14 angeordnet und gegenüber einem Zentralrahmen 14 in eine Arbeitsstellung (siehe Figur 1B) und eine Transportstellung (siehe Figur 1A) schwenkbar, wobei das Schwenken derartig erfolgt, dass in der Transportstellung jeweils eine maximal zulässige Transportbreite eingehalten werden kann. Insbesondere ist jeweils links und rechts neben dem Zentralrahmen 14 ein Seitenteil 12 vorgesehen.

Der Zentralrahmen 14 umfasst eine Zugdeichsel 16, bspw. in Form einer Zugöse, welche zur Verbindung mit einem hier nicht dargestellten landwirtschaftlichen Zugfahrzeug eingerichtet ist. Zudem umfasst der Zentralrahmen 14 ein Fahrwerk 18 mittels welchem das Arbeitsgerät 10 jeweils entlang einer landwirtschaftlichen Bodenfläche oder einem Feldweg oder einer Straße oder dergl. bewegt werden kann.

Darüber hinaus ist dem Zentralrahmen 14 zum Mitführen des jeweiligen Verteilgut ein Vorratsbehälter 20 zugeordnet. Wobei dieser insbesondere ein Gesamtvolumen von wenigstens 2000 Liter oder von wenigstens 4000 Liter aufweist. Der Vorratsbehälter 20 erstreckt sich zweckmäßig in Fahrtrichtung FR entlang des Zentralrahmen 14.

Gemäß der Figuren 2A bis 2D sind die Seitenteile 12 jeweils durch zumindest einen Rahmenträger 22 gebildet, an welchem Arbeitswerkzeuge 24, z.B. in Form von Säscharen, gelagert sind. Zudem ist am Rahmenträger 22, mittels eines Schwenkträgers 26, mindestens eine Abstützeinrichtung 28, welche zur Höhenführung der Arbeitswerkzeuge und/oder des Rahmenträger 22 entlang der Bodenfläche eingerichtet ist, schwenkbar gelagert.

Der Rahmenträger 22 ist durch ein sich in großer Länge erstreckendes Rahmenrohr gebildet. Der Rahmenträger 2 könnte alternativ oder ergänzend auch durch eine Fachwerkkonstruktion gebildet sein.

Die jeweiligen Arbeitswerkzeuge 24 sind zudem mittels eines sich parallel zum Rahmenrohr erstreckenden Montagerohr schwenkbar am Rahmenrohr gelagert, wobei wieder das Rahmenrohr und das Montagerohr Bestandteil des Rahmenträger sind oder diesen bilden.

Die Lagerung des Schwenkträger 26 erfolgt in schwenkbarer Weise mittels einer, in der Arbeitsstellung der Seitenteile 12 zumindest annähernd vertikal orientieren Achse 30.

Die Abstützeinrichtung 28 ist durch zwei nebeneinander angerordnete Einzelelemente gebildet, wobei wiederum das Einzelelement durch ein Rad 32 gebildet ist. Zudem ist der Durchmesser des Einzelelements, d.h. der Durchmesser der Räder 32, im Wesentlichen identisch oder um maximal 25% größer oder um maximal 50% größer als die Höhenerstreckung der Arbeitswerkzeuge 24.

Gemäß dem Ausführungsbeispiel ist der Schwenkträger 26 derartig an einem äußeren Endbereich des Rahmenträger 22 schwenkbar gelagert, dass die Abstützeinrichtung 28 in der Arbeitsstellung den Arbeitswerkzeugen 24 vorgelagert ist und in der Transportstellung zumindest abschnittweise oder vollständig seitlich neben den Arbeitswerkzeugen angeordnet ist. Dies kann insbesondere durch einen Schwenkwinkel α des Schwenkträger 26 zwischen der Arbeitsstellung und der Transportstellung erreicht werden der größer ist als 45° oder 90° und der kleiner ist als 150° (siehe Prinzipskizze des Schwenkwinkel α gemäß der Figur 2D). Gemäß dem Ausführungsbeispiel beträgt der Schwenkwinkel α insbesondere im Wesentlichen 110°. Wobei hierbei zudem angemerkt sei, dass die Drehrichtung des Schwenkträger 26 am Seitenteil 12 links das rechts am Zentralrahmen gelagert ist, entgegengesetzt ist zur Drehrichtung des Schwenkträger 26 am Seitenteil 12 das rechts am Zentralrahmen 14 gelagert ist.

Um die jeweiligen Schwenkwinkel α zu erreichen ist insbesondere vorgesehen, dass der Schwenkträger 26 einen im wesentlichen gespreizten L-förmigen verlauf aufweist. Wobei die Spreizung im Ausführungsbeispiel bspw. im Wesentlichen 135° beträgt.

Zudem kann erfindungsgemäß vorgesehen sein, dass zur Einhaltung der jeweiligen erforderlichen Lage der Abstützeinrichtungen 28 in der Arbeitsstellung und in der Transportstellung, zum Verschwenken des Schwenkträger 26 eine Stelleinrichtung 34 vorgesehen ist, wobei dessen Verfahrweg entsprechend ausgeführt und/oder anpassbar ist.

Um eine noch kompaktere Transportstellung zu erreichen ist zudem vorgesehen, dass die Stelleinrichtung 34 im inneren des Rahmenrohr des Rahmenträger 22 gelagert ist.

Die Abstützeinrichtung 28 ist höhenverstellbar am Schwenkträger 26 gelagert, wobei zur Höhenverstellung ein Aktor 36 vorgesehen ist. Alternativ oder ergänzend wäre es auch denkbar, dass der Schwenkträger 26 höhenverstellbar an dem Rahmenträger 22 gelagert ist.

Gemäß dem Ausführungsbeispiel sind zudem die Arbeitswerkzeuge 24 in deren Höhenlage verstellbar am Rahmenträger 22 gelagert, wobei hierfür wiederum eine Verstelleinrichtung 38 in Form eines insbesondere hydraulisch betriebenen Zylinders vorgesehen ist.

Zur Überführung des Arbeitsgeräts 10 aus der Arbeitsstellung in die Transportstellung ist gemäß dem Ausführungsbeispiel vorgesehen, das die Seitenteile 12 gegenüber dem Zentralrahmen 14 jeweils um 90° nach oben verschwenkbar angeordnet sind, insbesondere mittels eines einen Bestandteil des Zentralrahmen bildenden Koppelrahmen 44 der eine horizontale und sich quer zur Fahrtrichtung FR ersteckende Klappachse 40 aufweist um 90° nach oben verschwenkbar angeordnet sind, wobei die Rahmenträger 22 jeweils um eine sich etwa an ihrem inneren Endbereich befindenden Schwenkachse 42, die in der um 90° nach oben verschwenkten Stellung der Rahmenträger 22 aufrecht verläuft um 90° nach vorne in eine parallel zur Fahrtrichtung FR verlaufende Position schwenkbar sind.

Wie aus der Figur 1A hervorgeht, ist es möglich, dass die Abstützeinrichtung 28 mittels des Schwenkträger 26 derartig schwenkbar am Rahmenträger 22 gelagert ist, dass in der Transportstellung die Abstützeinrichtung 28 zumindest abschnittweise oberhalb des Vorratsbehälter 20 angeordnet ist und/oder in Fahrtrichtung FR zumindest abschnittweise vor dem Vorratsbehälter 20 angeordnet ist und/oder quer zur Fahrtrichtung FR zumindest abschnittweise neben dem Vorratsbehälter 20 angeordnet ist. Wobei insbesondere die Abstützreinrichtungen 28 der zwei Seitenteile 12 gegenüberliegend zueinander angeordnet sind.

Insbesondere ist vorgesehen, dass in der Transportstellung sowohl die Seitenteile 12 als auch die Abstützeinrichtung 28 sich oberhalb des Fahrwerks 18 befinden.

Gemäß dem Ausführungsbeispiel sind in der Transportstellung die Arbeitswerkzeuge 24 gegenüber dem Rahmenträger 22 im Wesentlichen senkrecht orientiert, es wäre jedoch auch denkbar, dass die Arbeitswerkzeuge 24 derartig verschwenkbar gelagert sind, bspw. derartig höhenverstellbar gelagert sind, dass deren Orientierung in der Transportstellung in Richtung der Mitte des Arbeitsgeräts 10 gerichtet ist, um somit auch die Transporthöhe zu verringern.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen.

### Bezugszeichenliste:

- 10: Arbeitsgerät
- 12: Seitenteil
- 14: Zentralrahmen
- 16: Zugdeichsel
- 18: Fahrwerk
- 20: Vorratsbehälter
- 22: Rahmenträger
- 24: Arbeitswerkzeug
- 26: Schwenkträger
- 28: Abstützeinrichtung
- 30: Vertikale Achse
- 32: Rad
- 34: Stelleinrichtung
- 36: Aktor
- 38: Verstelleinrichtung
- 40: Klappachse
- 42: Schwenkachse
- 44: Koppelrahmen

- α: Schwenkwinkel
- FR: Fahrtrichtung

## Patentansprüche

1. Landwirtschaftliches Arbeitsgerät (10), insbesondere Bodenbearbeitungs- und/oder Sägerät mit einer großen Arbeitsbreite, mit einem Zentralrahmen (14) und zwei gegenüber dem Zentralrahmen (14) in eine Arbeitsstellung und eine Transportstellung schwenkbare Seitenteile (12), wobei die Seitenteile (12) jeweils durch zumindest einen Rahmenträger (22) gebildet sind, an welchem Arbeitswerkzeuge (24) gelagert sind und an welchem mittels eines Schwenkträger (26) mindestens eine Abstützeinrichtung (28), welche zur Höhenführung der Arbeitswerkzeuge (24) und/oder des Rahmenträger (22) entlang einer Bodenfläche eingerichtet ist, gelagert ist, **dadurch gekennzeichnet, dass** der Schwenkträger (26) mittels einer in der Arbeitsstellung der Seitenteile (12) zumindest annähernd vertikal orientierten Achse (30) schwenkbar an dem Rahmenträger (22) gelagert ist.

2. Arbeitsgerät (10) nach Anspruch 1, **dadurch gekennzeichnet, dass** der Schwenkträger (26) derartig schwenkbar an dem Rahmenträger (22) gelagert ist, insbesondere an einem äußeren Endbereich des Rahmenträger (22) schwenkbar gelagert ist, dass die Abstützeinrichtung (28) in der Arbeitsstellung den Arbeitswerkzeugen (24) vorgelagert ist und in der Transportstellung zumindest abschnittweise oder vollständig seitlich neben den Arbeitswerkzeugen (24) angeordnet ist.

3. Arbeitsgerät (10) nach einem der vorstehenden Ansprüche, **dadurch gekennzeichnet, dass** ein Schwenkwinkel (α) des Schwenkträger (26) zwischen der Arbeitsstellung und der Transportstellung größer ist als 45° oder größer ist 90° und insbesondere kleiner ist als 150°.

4. Arbeitsgerät (10) nach einem der vorstehenden Ansprüche, **dadurch gekennzeichnet, dass** zur Einhaltung der jeweiligen erforderlichen Lage der Abstützeinrichtungen (28) in der Arbeitsstellung und in der Transportstellung,
- mit dem Rahmenträger (22) und dem Schwenkträger (26) in Wirkverbindung stehende Endanschläge vorgesehen sind, wobei die Lage der Endanschläge insbesondere verstellbar ausgeführt ist und/oder
- dass zum Verschwenken des Schwenkträger (26) eine Stelleinrichtung (34) vorgesehen ist, wobei dessen Verfahrweg entsprechend ausgeführt und/oder anpassbar ist.

5. Arbeitsgerät (10) nach einem der vorstehenden Ansprüche, **dadurch gekennzeichnet, dass**
- die Abstützeinrichtung (28) höhenverstellbar am Schwenkträger (26) gelagert ist, vorzugsweise mittels eines Aktors (36) höhenverstellbar am Schwenkträger (26) gelagert ist und/oder
- dass der Schwenkträger (26) höhenverstellbar am Rahmenträger (22) gelagert ist, vorzugsweise mittels eines Aktors (36) höhenverstellbar am Rahmenträger (22) gelagert ist.

6. Arbeitsgerät (10) nach einem der vorstehenden Ansprüche, **dadurch gekennzeichnet, dass** dem Zentralrahmen (14) eine Zugdeichsel (16) und ein Fahrwerk (18) zugeordnet sind und die Seitenteile (12) sich in der Arbeitsstellung jeweils seitlich des Zentralrahmens (14) erstrecken, wobei zur Überführung des Arbeitsgeräts (10) aus der Arbeitsstellung in die Transportstellung die Seitenteile (12) gegenüber dem Zentralrahmen (14) jeweils um 90° nach oben verschwenkbar angeordnet sind, insbesondere mittels eines einen Bestandteil des Zentralrahmen bildenden Koppelrahmen (44) der eine horizontale und sich quer zur Fahrtrichtung (FR) ersteckende Klappachse (40) aufweist um 90° nach oben verschwenkbar angeordnet sind, und wobei die Rahmenträger (22) jeweils um eine sich etwa an ihrem inneren Endbereich befindende Schwenkachse (42), die in der um 90° nach oben verschwenkten Stellung der Rahmenträger (22) aufrecht verläuft um 90° nach vorne in eine parallel zur Fahrtrichtung (FR) verlaufende Position schwenkbar sind.

7. Arbeitsgerät (10) nach einem der vorstehenden Ansprüche, insbesondere nach Anspruch 4, **dadurch gekennzeichnet, dass** das Schwenken des Schwenkträgers (26) mittels einer Stelleinrichtung (34) erfolgt, wobei die Stelleinrichtung (34) mittels durch eine Steuereinrichtung erzeugte Stellsignale ansteuerbar ist und wobei die Steuereinrichtung eingerichtet ist, Stellsignale zum verschwenken des Schwenkträger (26) automatisiert anhand einer Überführung der Seitenteile (12) von der Arbeitsstellung in die Transportstellung zu erzeugen.

8. Arbeitsgerät (10) nach einem der vorstehenden Ansprüche, **dadurch gekennzeichnet, dass** dem Zentralrahmen (14) ein Vorratsbehälter (20) zugeordnet ist, der insbesondere ein Gesamtvolumen von wenigstens 2000 Liter oder von wenigstens 4000 Liter aufweist.

9. Arbeitsgerät (10) nach einem der vorstehenden Ansprüche, **dadurch gekennzeichnet, dass** die Abstützeinrichtung (28) mittels des Schwenkträger (26) derartig schwenkbar an dem Rahmenträger (22) gelagert ist, dass in der Transportstellung die Abstützeinrichtung (28) zumindest abschnittweise oberhalb des Vorratsbehälter (20) angeordnet ist und/oder in Fahrtrichtung (FR) zumindest abschnittweise vor dem Vorratsbehälter (20) angeordnet ist und/oder quer zur Fahrtrichtung (FR) zumindest abschnittweise neben dem Vorratsbehälter (20) angeordnet ist.

10. Arbeitsgerät (10) nach einem der vorstehenden Ansprüche, **dadurch gekennzeichnet, dass** die Abstützreinrichtung (28) durch ein Einzelelement oder durch zwei oder mehr nebeneinander angeordnete Einzelelemente oder als Walze gebildet ist, wobei vorzugsweise der Durchmesser eines Einzelelements oder der Walze im Wesentlichen identisch oder um maximal 25% größer oder um maximal 50% größer ist als die Höhenerstreckung der Arbeitswerkzeuge (24).
